(19) Europäisches Patentamt
European Patent Office
Office européen des brevets

(11) **EP 1 857 503 B1**

(12) **EUROPEAN PATENT SPECIFICATION**

(45) Date of publication and mention
of the grant of the patent:
**06.10.2010 Bulletin 2010/40**

(21) Application number: **06713289.4**

(22) Date of filing: **08.02.2006**

(51) Int Cl.:
*C08L 33/06* (2006.01)
*C08L 25/10* (2006.01)
*C09D 5/02* (2006.01)
*C09D 125/10* (2006.01)
*C09D 133/06* (2006.01)
*C08F 2/24* (2006.01)
*C08L 29/04* (2006.01)
*C09D 7/12* (2006.01)
*C09D 129/04* (2006.01)

(86) International application number:
**PCT/JP2006/302146**

(87) International publication number:
**WO 2006/095524 (14.09.2006 Gazette 2006/37)**

(54) **AQUEOUS EMULSION AND COATING**

WÄSSRIGE EMULSION UND BESCHICHTUNG

EMULSION AQUEUSE ET REVETEMENT

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **09.03.2005 JP 2005065152**

(43) Date of publication of application:
**21.11.2007 Bulletin 2007/47**

(73) Proprietor: **KURARAY CO., LTD.**
**Kurashiki-shi, Okayama 710-8622 (JP)**

(72) Inventors:
• **MAKI, Hideki**
**Okayama, 7108622 (JP)**
• **TANIMOTO, Seiji**
**Tokyo, 1008115 (JP)**
• **NAKAMAE, Masato**
**Okayama, 7108622 (JP)**

(74) Representative: **Tanner, James Percival et al**
**D Young & Co LLP**
**120 Holborn**
**London EC1N 2DY (GB)**

(56) References cited:
EP-A- 0 924 229       JP-A- 06 220 369
JP-A- 2001 233 905    JP-A- 2001 234 018
JP-A- 2003 171 567    JP-A- 2004 346 183
JP-A- 2005 133 077

**Description**

Technical Field

The present invention relates to an aqueous emulsion and a coating. More particularly, the present invention relates to an aqueous emulsion including a polymer having at least one monomer unit selected from the group consisting of a (meth)acrylate ester monomer unit, a styrene monomer unit and a diene monomer unit as a dispersoid, the aqueous emulsion which is excellent in mechanical stability, film transparency, pigment compatibility and solvent resistance, including a vinyl alcohol polymer (A) having 1.9 mol% or more 1,2-glycol bond and a saponification degree of 70 mol% or more and a surfactant (B) as dispersants, wherein the surfactant (B) is at least one selected from the group consisting of polyoxyethylene alkyl ether, polyoxyethylene-polyoxypropylene block copolymers, polyoxyethylene alkyl ether sulfate ester salts, alkyl sulfate ester salts, sodium alkyldiphenyl ether disulfonate salts and sodium dialkyl sulfosuccinate ester salts and a ratio of (A)/(B) is 50/50 to 95/5 by weight and an average particle diameter of particles dispersed in the emulsion is 0.5 $\mu$m or less, and a coating by the use thereof.

Background Art

Conventionally, as exterior materials for the purpose of protecting construction wall surfaces and making beautiful decoration, wet exterior materials such as mortar finishing, tiling and various paint applications in addition to dry exterior materials such as decorative galvanized iron, print plywood, various inorganic plates and metallic panels have been mainly used. However, in recent years, as properties required for the exterior materials, workability, economical efficiency, beautiful appearance and the like have become important, and wet construction methods have become remarkably widespread. However, to keep a beautiful appearance, film transparency has been required.

Furthermore, the property required for the aqueous emulsion as a binder for coatings includes pigment compatibility and solvent resistance. However, in the case of the aqueous emulsion including a so-called vinyl alcohol polymer (PVA) partially saponified generally having a saponification degree of about 88 mol% as a dispersant, whitening, softening and swelling of the coating due to water absorption occur because the water absorption is large, and since PVA is abundantly eluted from the coating, the aqueous emulsion is not satisfied in terms of protection of painted surfaces and beautiful decoration which are the original purposes of the painting.

Also, in the case of the aqueous emulsion including so-called completely saponified PVA having the saponification degree of about 98% as the dispersant, various problems due to low water resistance in the above partially saponified PVA are decreased, but viscosity stability and pigment compatibility are deteriorated at low temperatures. Therefore, the conventional aqueous emulsion as the binder for the coating was mainly obtained by emulsion polymerization using various surfactants (emulsifiers) as the dispersant without using PVA, particularly in the case for the exterior.

However, in the case of this emulsifier based aqueous emulsion, the waterproof property and water resistance are relatively good, but mixing stability with various pigments and mechanical stability are insufficient in some cases. Generally, particle sizes are small in the emulsifier based aqueous emulsion. Thus, in the case of the thick coating, the particles migrate in a direction of water migration in a drying process. Consequently, a film forming speed is different between a coating surface and a coating inside to cause cracks in the coating. In the case of concrete substrates, when the coating is softened for preventing crack spreading (even when the crack occurs in the priming, no crack occurs in the coating) to a coating protection side caused by priming cracks, it results in an increase in adhesiveness, contamination resistance is diminished and in some cases, the solvent resistance is deteriorated.

Meanwhile, acrylic resin emulsion powder excellent in redispersibility, obtained by spraying and drying emulsion produced by emulsion polymerization of an acrylic monomer using a polyvinyl alcohol polymer having an average polymerization degree of 500 or less as a protection colloid is known (Patent Document 1), it is disclosed here to combine with an anion surfactant, but the use of the surfactant at a particular amount and its technical significance are not disclosed at all.

The aqueous emulsion including a polymer having a vinyl ester unit as the dispersoid and PVA having 1.9 mol% or more 1, 2-glycol bond as the dispersant is also known (Patent Documents 2 to 3). It is also described here to combine with the surfactant, but no specific exemplification of the surfactant is described and even more, the use of the surfactant at a particular amount and its technical significance are not disclosed at all.

Patent Document 1: Japanese Published Unexamined Patent Application No. H4-185607
Patent Document 2: Japanese Published Unexamined Patent Application No. 2001-220484
Patent Document 3: Japanese Published Unexamined Patent Application No. 2004-346182

Disclosure of the Invention

Problems to be Solved by the Invention

The present invention has solved shortcomings in these conventional technologies, and aims at providing an aqueous emulsion which is excellent in mechanical stability and pigment compatibility and further is also excellent in film transparency and solvent resistance, and a coating by the use thereof. Means for Solving the Problems

As a result of an extensive study by focusing a dispersant in an aqueous emulsion including a polymer having at least one monomer unit selected from the group consisting of a (meth)acrylate ester monomer unit, a styrene monomer unit and a diene monomer unit as a dispersoid, to accomplish the above object, the present inventors have attained the present invention. That is, the present invention is an aqueous emulsion including a polymer having at least one monomer unit selected from the group consisting of a (meth)acrylate ester monomer unit, a styrene monomer unit and a diene monomer unit as a dispersoid, further including a vinyl alcohol polymer (A) having 1.9 mol% or more 1,2-glycol bond and a saponification degree of 70 mol% or more and a surfactant (B) as dispersants, characterized in that the surfactant (B) is at least one selected from the group consisting of polyoxyethylene alkyl ether, polyoxyethylene-polyoxypropylene block copolymers, polyoxyethylene alkyl ether sulfate ester salts, alkyl sulfate ester salts, sodium alkyldiphenyl ether disulfonate salts and sodium dialkyl sulfosuccinate ester salts and a weight ratio of (A)/(B) is 50/50 to 95/5 and an average particle diameter of dispersed particles is 0.5 $\mu$m or less. And, another invention in the present invention is a coating composed of such an aqueous emulsion.

Effects of the Invention

According to the present invention, it is possible to provide the aqueous emulsion including the polymer having at least one monomer unit selected from the group consisting of the (meth) acrylate ester monomer unit, the styrene monomer unit and the diene monomer unit as the dispersoid, and including (A) the vinyl alcohol polymer having 1. 9 mol% or more 1,2-glycol bond and the saponification degree of 70 mol% or more and (B) the surfactant as the dispersants, wherein the surfactant (B) is at least one selected from the group consisting of polyoxyethylene alkyl ether, polyoxyethylene-polyoxypropylene block copolymers, polyoxyethylene alkyl ether sulfate ester salts, alkyl sulfate ester salts, sodium alkyldiphenyl ether disulfonate salts and sodium dialkyl sulfosuccinate ester salts and the weight ratio of (A)/(B) is 50/50 to 95/5 and the average particle diameter of dispersed particles is 0.5 $\mu$m or less. Such an aqueous emulsion is excellent in mechanical stability and pigment compatibility and is also further excellent in film transparency and solvent resistance, and thus is suitable as the coating. Best Modes for Carrying Out the Invention

The aqueous emulsion of the present invention includes a polymer having at least one monomer unit selected from the group consisting of a (meth)acrylate ester monomer unit, a styrene monomer unit and a diene monomer unit as a dispersoid. The acrylate ester monomer includes acrylate esters such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, 2-hydroxyethyl acrylate and octadecyl acrylate. The methacrylate ester monomer includes methacrylate esters such as methyl methacrylate, ethyl methacrylate, n-propyl methacrylate, i-propyl methacrylate, n-butyl methacrylate, i-butyl methacrylate, t-butyl methacrylate,2-ethylhexyl methacrylate, dodecyl methacrylate, 2-hydroxyethyl methacrylate and octadecyl methacrylate. The styrene monomer includes styrene, $\alpha$-methylstyrene, p-styrene sulfonic acid, sodium p-styrene sulfonate salt and potassium p-styrene sulfonate salt. The diene monomer includes butadiene, isoprene and chloroprene. These may be used alone or in combination of two or more.

The polymer which composes the dispersoid in the aqueous emulsion is preferably a polymer or a copolymer obtained by polymerizing these monomers. Among them, the copolymer of methyl (meth)acrylate and butyl (meth) acrylate and the copolymer (SBR) of styrene and butadiene are preferable.

A method for producing the vinyl alcohol polymer (PVA) (A) having 1.9 mol% or more 1,2-glycol bond, which composes the dispersant of the aqueous emulsion is not particularly limited, and publicly known methods can be used. As examples, the method of copolymerizingvinylene carbonate with vinyl ester so that an amount of 1,2-glycol to be bound becomes a value in the above range, and the method of polymerizing vinyl ester under pressure at a higher polymerization temperature, e.g., 75 to 200˚C than a usual condition are included. In the latter method, the polymerization temperature is preferably 95 to 190˚C, and particularly preferably 100 to 180˚C. As a pressurization condition, it is important to select so that the temperature in a polymerization system is equal to or lower than a boiling point, and the pressure is suitably 0.2 MPa or more, and more suitably 0.3 MPa. An upper limit is suitably 5 MPa or less and more suitably 3 MPa or less.

The above polymerization can be performed by any of a mass polymerization method, a solution polymerization method, a suspension polymerization method, and an emulsion polymerization method in the presence of a radical polymerization initiator. The solution polymerization, particularly the solution polymerization using methanol as the solvent is suitable. PVA containing a high content of 1,2-glycol bond is obtained by saponifying the vinyl ester polymer obtained in this way, by an ordinary method.

When the content of 1,2-glycol bond in PVA is less than 1.9 mol%, the mechanical stability in the resulting aqueous emulsion is diminished and further polymerization stability is also diminished. Thus, the content of 1.9 mol% or more is needed. The content is preferably 1.95 mol% or more, more preferably 2:0 mol% or more and still more preferably 2.1 mol% or more. The content of 1,2-glycol bond is preferably 4 mol% or less, more preferably 3.5 mol% or less and still more preferably 3.2 mol% or less. The content of 1,2-glycol bond can be calculated from analysis of NMR spectrum.

Vinyl ester used for producing PVA includes vinyl formate, vinyl acetate, vinyl propionate and vinyl pivalate. Generally, vinyl acetate is preferably used. PVA may be those obtained by copolymerizing an ethylenic unsaturated monomer copolymerizable in the range in which the effects of the present invention are not impaired.

Such an ethylenic unsaturated monomer includes, for example, ethylene, acrylic acid, methacrylic acid, fumaric acid, maleic acid (anhydride), itaconic acid (anhydride), acrylonitrile, methacrylonitrile, acrylamide, methacrylamide, trimethyl-(3-acrylamide-3-dimethylpropyl)-ammonium chloride, acrylamide-2-methylpropane sulfonic acid or sodium salts thereof, ethyl vinyl ether, butyl vinyl ether, N-vinyl pyrrolidone, vinyl chloride, vinyl bromide, vinyl fluoride, vinylidene chloride,vinylidene fluoride,tetrafluoroethylene, sodium vinyl sulfonate, sodium allyl sulfonate, N-vinyl pyrrolidone, and N-vinyl amides such as N-vinyl formamide and N-vinyl acetamide. It is also possible to use end modified products obtained by copolymerizing a vinyl ester monomer such as vinyl acetate with ethylene in the presence of a thiol compound such as thiol acetic acid and mercaptopropionic acid and saponifying it.

When the saponification degree of PVA (A) which composes the dispersant in the aqueous emulsion is too small, a water solubility which is a nature inherent to PVA tends to diminish: Thus, the saponification degree is preferably 70 mol% or more, more preferably 75 mol% or more and still more preferably 80 mol% or more.

A polymerization degree of the PVA (A) is not particularly limited, but when it is too small, a characteristic of PVA as the protection colloid is not exerted whereas when it is too large, industrial production of PVA is problematic. Thus, the polymerization degree is typically in the range of 100 to 8,000 and more preferably 300 to 3,000.

As the surfactant (B) which composes the dispersant in the aqueous emulsion, at least one of a nonionic surfactant or an anionic surfactant selected from the group consisting of polyoxyethylene alkyl ether, polyoxyethylene-polyoxypropylene block copolymer, polyoxyethylene alkyl ether sulfate ester salts, alkyl sulfate ester salts, sodium alkyldiphenyl ether disulfonate salts and sodium sulfosuccinate dialkyl ester salts is used. It is also possible to combine water soluble macromolecules such as methylcellulose and hydroxyethylcellulose, and PVA having less than 1.7 mol% 1, 2-glycol bond in the dispersant in the aqueous emulsion in the range in which the effect of the present invention is not impaired.

It is important and a great characteristic of the present invention that the weight ratio (A) / (B) of PVA (A) to the surfactant (B) which compose the dispersants in the aqueous emulsion is in the range of 50/50 to 95/5. The ratio is preferably in the range of 55/45 to 90/10 and more preferably 60/40 to 85/15. When the ratio (A)/(B) is less than 50/50, the mechanical stability is diminished and the pigment compatibility and the solvent resistance are deteriorated in the emulsion as is evident from Comparative Example 2 described later. When (A)/(B) exceeds 95/5, the film transparency is diminished as is evident from Comparative Example 1 described later.

It is an important characteristic of the present invention that the average particle diameter of the dispersed particles in the aqueous emulsion of the present invention is 0.5 $\mu$m or less, and the aqueous emulsion which is the object of the present invention can be obtained by satisfying this condition.

In the aqueous emulsion of the present invention, when the ratio of the dispersant to the dispersoid is too small, the polymerization stability is sometimes diminished whereas if it is too large, shelf stability of the emulsion is sometimes diminished. Thus, it is preferable to contain 2 to 20 parts by weight, more preferably 3 to 15 parts by weight of the dispersant relative to 100 parts by weight of the dispersoid.

In the aqueous emulsion of the present invention, a fraction insoluble in toluene is preferably 50% or less, more preferably 45% or less and still more preferably 40% or less. When the fraction insoluble in toluene satisfies this condition, a crack preventing effect on a paintwork of the aqueous emulsion is enhanced. The fraction insoluble in toluene is a percentage of the insoluble fraction contained in a film obtained by drying the aqueous emulsion.

As the method for producing the aqueous emulsion of the present invention, the method of at one time or continuously adding the monomer e.g., the (meth) acrylate ester monomer, the styrene monomer or the diene monomer which is the dispersoid into an aqueous solution including the vinyl alcohol polymer PVA (A) having 1.9 mol% or more 1,2-glycol bond and the saponification degree of 70 mol% or more and the surfactant (B) which are dispersants at the weight ratio (A)/(B) of 50/50 to 95/5, and performing the emulsion polymerization by adding a polymerization initiator such as an azo based polymerization initiator or a peroxide based polymerization initiator, e.g., hydrogen peroxide, ammonium persulfate and potassium persulfate.

The polymerization initiator is combined with a reducing agent, which are then used in a redox system in some cases. In that case, hydrogen peroxide is typically used together with tartaric acid, sodium tartrate, L-ascorbic acid or Rongalite. Also, ammonium persulfate and potassium persulfate are used together with sodium hydrogen sulfite or sodium hydrogen carbonate. The PVA (A) and the surfactant (B) can be added simultaneously or can be added separately.

Various emulsions known conventionally and publicly can be added to the aqueous emulsion of the present invention if necessary in the range in which the effect of the present invention is not impaired. Therefore, the aqueous emulsion obtained by the above method may be used as it is for the coating of the present invention, but the aqueous emulsion in which various emulsions known conventionally and publicly have been added may be used.

The aqueous emulsion of the present invention is preferably used as the coating, and is more preferably used by combining a pigment. The pigment is not particularly limited, and various natural pigments, synthesized inorganic pigments and synthesized organic pigments can be used. Specifically, it is possible to exemplify colored pigments (titanium white, yellow iron oxide, ultramarine blue pigments, cadmium yellow, colcothar, chromium yellow, carbon black, cyanine pigments, azo pigments, triphenylmethane pigments, quinoline pigments, anthraquinone pigments, phthalocyanine pigments and the like), extender pigments (barium sulfate, calcium carbonate, kaolin, talc, silica, alumina, pearlite, silica sand and the like), special pigments (anticorrosive pigments, luminescent pigments, heat-sensitive pigments), fibrous or scale-like special inorganic pigments (asbestos, rock wool, mica and the like). These may be used alone or in combination of two or more.

The amount of the pigment to be combined is not particularly limited, but when the amount is too small, swelling sometimes occurs in the film whereas when it is too large, flexibility and elasticity of the film are sometimes impaired. Thus, the amount of the pigment to be combined is preferably 40 to 400 parts by weight and more preferably 60 to 300 parts by weight relative to 100 parts by weight of a solid content in the aqueous emulsion.

In the aqueous emulsion and the coating of the present invention, it is possible to add various additives used for typically preparing the aqueous emulsion type coating as needed, e.g., thickeners such as methylcellulose, carboxymethylcellulose, polyvinyl alcohol, polyacrylate salts, polyacrylamide and polyvinyl pyrrolidone; condensed phosphate salts such as tripolyphosphate salts and hexametaphosphate salts; anionic, nonionic and cationic surfactants; dispersants such as styrene-maleic anhydride half ester salt copolymers and diisobutylene-maleic anhydride half ester salt copolymers; further, antifoaming agents, mildewproofing agents, preservatives, film forming aids, anti-aging agents and anti-freezing agents in the range in which the object of the present invention is not impaired.

The aqueous emulsion and the coating of the present invention is applied by ordinary methods using a roll, a trowel, a brush or a spray gun. And, these can be used suitably for various surfaces such as a wall surface, floor surface and ceiling surface composed of concretes, mortars, ALC plates, flexible plates, metal plates and plywood. At that time, priming agents and topcoat agents can also be used for the purpose of improving adhesiveness to the priming, waterproof property, weather resistance and beautiful appearance.

The present invention will be described in more detail with reference to the following Examples, but the present invention is not limited thereto. In the following Examples, "%" and "parts" mean "% by weight" and "parts by weight" unless otherwise specified. The amount of the surfactant means an active component amount. The average particle diameter and the fraction insoluble in toluene were measured as follows. The mechanical stability, the pigment compatibility, the film transparency and the solvent resistance were evaluated as follows.

(Average particle diameter)

The aqueous emulsion was diluted to a concentration of 0.2%, and the average particle diameter was measured using a laser zeta potential meter ELS-800 supplied by Otsuka Electronics Co., Ltd. by a dynamic light scattering method.

(Fraction insoluble in toluene)

The aqueous emulsion was flow-cast on a polyethylene terephthalate (PET) film under a condition at 20˚C and relative humidity of 65% and dried for 7 days to yield a dried film with a thickness of 500 $\mu$m. About 1 g of this film was extracted with 100 mL of toluene at 90˚C or above for 2 hours, and subsequently an absolute dry weight of an insoluble fraction filtrated and collected with a wire mesh having 300 mesh was measured and the fraction insoluble in toluene was calculated according to the following formula.

Fraction insoluble in toluene (%) = (Absolute dry weight of insoluble fraction/Absolute dry weight of film before extraction) $\times$ 100

    * Absolute dry weight of insoluble fraction: weight obtained by absolutely drying the filtrated and collected insoluble fraction at 105˚C for 4 hours.

    * Absolute dry weight of film before extraction: Film weight before extraction (containing water) - [Film weight before extraction (containing water) $\times$ Film water content (%)/100]

    * Film water content: the water content in the film is previously calculated by absolutely drying the film (different sample from the sample used for the extraction) at 105˚C for 4 hours.

(Mechanical stability).

The aqueous emulsion was tested under the condition of 20˚C, load of 0.5 kg/cm$^2$ and 1,000 rpm using Maron type mechanical stability tester. Subsequently, the aqueous emulsion was filtrated using a stainless wire mesh of 60 mesh (ASTM standard sieve) to measure the percentage of a filtration residue weight based on the solid content weight of the emulsion. The smaller the percentage of the filtration residue weight is, the more excellent the mechanical stability is.
The solid content weight and the filtration residue weight were measured as follows.

   \* Measurement of solid content weight
   About 3 g of the aqueous emulsion was placed on an aluminum dish, weighed and dried in a dryer at 105˚C for 24 hours to evaporate the water. Subsequently, the weight of a dried product was measured to calculate the solid content weight.
   \* Measurement of filtration residue weight
   The filtration residue was dried in the dryer at 105˚C for 24 hours to evaporate the water, and the weight of a dried product was rendered the filtration residue weight.

(Pigment compatibility)

A dispersion state when 100 parts of the pigment (calcium carbonate) was added to 100 parts of the solid content of the aqueous emulsion was evaluated by a 3 point scale based on the following criteria.

   ○: Good dispersibility
   △: Increased viscosity
   ×: Occurrence of coagulation with rough touch

(Film transparency)

The aqueous emulsion was flow cast on the PET film under 20˚C and 65% RH and dried for 7 days to yield a dried film with a thickness of 500 $\mu$m. The transparency of the film was visually evaluated based on the following criteria.

   ○: Transparent
   △: Slightly cloudy
   ×: Cloudy

(Solvent resistance)

The aqueous emulsion was flow cast on the PET film under 20˚C and 65% RH and dried for 7 days to yield a dried film with a thickness of 500 $\mu$m. This film was punched out into a disc shape having a diameter of 2.5 cm. The disc shaped film was immersed in acetone for 24 hours, and then a liquid absorption rate and an elution rate were calculated.

$$\text{Liquid absorption rate (\%)} = [(\text{Liquid absorption weight of film after immersion/Absolute dry weight of film before immersion}) - 1] \times 100$$

$$\text{Degree of dissolution (\%)} = [1 - (\text{Absolute dry weight of film after immersion/Absolute dry weight of film before immersion}) \times 100$$

```
* Absolute dry weight of film before immersion: Film weight
(containing water) before immersion - [Film weight (containing
water) before immersion × Film water content (%)/100]
```

* Film water content: the water content in the film is previously calculated by absolutely drying the film (different sample from the sample used for the immersion in acetone at 20˚C) at 105˚C for 4 hours.
* Absolute dry weight of film after immersion: weight obtained by absolutely drying the film after the immersion at 105˚C for 4 hours.
* Liquid absorption weight of film after immersion: the film after the immersion was picked up from acetone, acetone on the film was wiped with gauze, and then the film was weighed.

Subsequently, vinyl alcohol polymers (PVA-1 to PVA-7) used in the following Examples and Comparative Examples are as follows.

PVA-1

In a 5-liter pressure reactor equipped with a stirrer, a nitrogen introducing inlet and an initiator introducing inlet, 2940 g of vinyl acetate, 60 g of methanol and 0.088 g of tartaric acid were placed and left to stand for 10 minutes while increasing the pressure in the reactor up to 2.0 MPa as bubbling with nitrogen gas was performed at room temperature, and then the pressure was released. This manipulation was repeated three times to replace the inside of the system with nitrogen. A solution of 0.2 g/L of 2,2'-azobis(cyclohexane-1-carbonitrile) (V-40) as an initiator dissolved in methanol was prepared, and nitrogen replacement was performed by bubbling with nitrogen gas. Then, the temperature in the polymerization reactor was raised to 120˚C. The pressure in the reactor at that time was 0.5 MPa.

The polymerization was initiated by injecting 2.5 mL of the above initiator solution. A polymerization temperature was kept at 120˚C during the polymerization. The polymerization was performed by continuously adding V-40 at 10.0 mL/hr using the above initiator solution. The pressure in the reactor during the polymerization was 0.5 MPa. After 3 hours, the polymerization was stopped by cooling. A solid content concentration at that time was 24%. Then, the unreacted vinyl acetate monomer was removed at 30˚C under reduced pressure while sometimes adding methanol to yield a solution of polyvinyl acetate in methanol (concentration: 33%).

Saponification was performed by adding 3.72 g (molar ratio (MR) to a vinyl acetate unit in polyvinyl acetate: 0.008) of an alkali solution (solution of 10% NaOH in methanol) at 40˚C to 400 g of the solution of polyvinyl acetate in methanol (polyvinyl acetate in the solution: 100 g) in which methanol had been added to the resulting polyvinyl acetate solution to adjust a concentration to 25%. A product gelled about 2 minutes after the addition of the alkali solution was pulverized by a pulverizer, the saponification was advanced by leaving it to stand for one hour, and then residual alkali was neutralized by adding 1,000 g of methyl acetate.

Using a phenolphthalein indicator, the completion of neutralization was confirmed, and subsequently 1000 g of methanol was added to a white solid PVA obtained by filtration, which was then left to stand at room temperature for 3 hours for washing. The above washing manipulation was repeated three times. Then, PVA obtained by centrifuging to remove the liquid was left to stand in the dryer at 70˚C for 2 days to yield dry PVA (PVA-1). The saponification degree of the resulting PVA (PVA-1) was 88 mol%.

Purified PVA was yielded by saponifying with MR 0.5 a solution of polyvinyl acetate in methanol obtained by removing an unreacted vinyl acetate monomer after the polymerization and then pulverizing, subsequently leaving it to stand at 60˚C for 5 hours to advance the saponification, then performing Soxhlet washing with methanol for 3 days, and drying at 80˚C under reduced pressure for 3 days. An average polymerization degree of the PVA was measured according to the standard method JISK6726, and it was 1700. An amount of 1,2-glycol bond in the purified PVA was measured using 500 MHz proton NMR (JEOL GX-500) apparatus, and was 2.2 mol%.

PVA-2

PVA-2 was yielded in the same way as in the production of PVA-1, except that the amount of the alkali solution to be added was changed to 11.6 g. This was measured as with PVA-1. In the result, the average polymerization degree was 1700, the saponification degree was 98 mol%, and the amount of 1, 2-glycol bond was 2.2 mol%.

PVA-3

PVA-3 was yielded in the same way as in the production of PVA-1, except that the amount of added vinyl acetate was changed to 2700 g and the amount of added methanol was changed to 300g. This was measured as with PVA-1. In the result, the average polymerization degree was 500, the saponification degree was 88 mol% , and the amount of 1, 2-glycol bond was 2.2 mol%.

PVA-4

In a 5-liter pressure reactor equipped with a stirrer, a nitrogen introducing inlet and an initiator introducing inlet, 2850 g of vinyl acetate, 150 g of methanol and 0.086 g of tartaric acid were placed and left to stand for 10 minutes while increasing the pressure in the reactor up to 2.0 MPa as bubbling with nitrogen gas was performed at room temperature, and then the pressure was released. This manipulation was repeated three times to replace an inside of the system with nitrogen. A solution of 0.1 g/L of 2,2'-azobis(N-butyl-2-methylpropionamide) as the initiator dissolved in methanol was prepared, and nitrogen replacement was performed by bubbling with nitrogen gas. Then, the temperature in the polymerization reactor was raised to 150˚C, ethylene was introduced and the pressure in the reactor was made 20 MPa.
The polymerization was initiated by injecting 15.0 mL of the above initiator solution. A polymerization temperature was kept at 150˚C during the polymerization. The polymerization was performed by continuously adding 2,2'-azobis(N-butyl-2-methylpropionamide) at 15.8mL/hrusing the above initiator solution. The pressure in the reactor during the polymerization was 20 MPa. After 4 hours, the polymerization was stopped by cooling. A solid content concentration at that time was 35%. Then, the unreacted vinyl acetate monomer was removed at 30˚C under reduced pressure while sometimes adding methanol to yield a solution of polyvinyl acetate in methanol (concentration: 33%).
Saponification was performed by adding 4.65 g (molar ratio (MR) to the vinyl acetate unit in polyvinyl acetate is 0.01) of the alkali solution (solution of 10% NaOH in methanol) at 40˚C to 400 g of the solution of polyvinyl acetate in methanol (polyvinyl acetate in the solution: 100 g) in which methanol had been added to the resulting polyvinyl acetate solution to adjust a concentration to 25%. A product gelled about 3 minutes after the addition of the alkali solution was pulverized by the pulverizer, the saponification was advanced by leaving it to stand for one hour, and then residual alkali was neutralized by adding 1000 g of methyl acetate.
Using the phenolphthalein indicator, the completion of neutralization was confirmed, and subsequently 1000 g of methanol was added to a white solid PVA obtained by filtration, which was then left to stand at room temperature for 3 hours for washing. The above washing manipulation was repeated three times. Then, PVA obtained by centrifuging to remove the liquid was left to stand in the dryer at 70˚C for 2 days to yield dry PVA (PVA-3). The saponification degree of the resulting PVA (PVA-3) was 88 mol%.
Purified PVA was yielded by saponifying with MR 0.5 a solution of polyvinyl acetate in methanol obtained by removing the unreacted vinyl acetate monomer after the polymerization and then pulverizing, subsequently leaving it to stand at 60˚C for 5 hours to advance the saponification, then performing Soxhlet washing with methanol for 3 days, and drying at 80˚C under reduced pressure for 3 days. The average polymerization degree of the PVA was measured according to the standard method JISK6726, and it was 1000. The amount of 1,2-glycol bond in the purified PVA was measured using 500 MHz proton NMR (JEOL GX-500) apparatus as described above, and was 2.5 mol%. The content of an ethylene unit was 4.0 mol%.

PVA-5

PVA-5 was obtained in the same way as in the production of PVA-4, except that the polymerization temperature was changed to 80˚C. This was measured as with PVA-3. In the results, the average polymerization degree was 1000, the saponification degree was 88 mol%, the amount of 1, 2-glycol bond was 1. 6 mol%, and the content of the ethylene unit was 4.0 mol%.

PVA 6

Brand name: PVA-217 supplied by Kuraray Co., Ltd. was used (saponification degree: 88 mol%, average polymerization degree: 1700, amount of 1,2-glycol bond: 1.6 mol%).

PVA-7

Brand name: PVA-117 supplied by Kuraray Co., Ltd. was used (saponification degree: 98 mol%, average polymerization degree: 1700, amount of 1,2-glycol bond: 1.6 mol%).

Example 1

In a 2-liter glass polymerization vessel equipped with a reflux cooling device, a thermometer, a nitrogen blowing inlet and an anchor type stirring wing, 750 g of ion-exchanged water, 24 g of PVA-1 and 16 g of polyoxyethylene lauryl ether (DKS NL-250 supplied by Dai-ichi Kogyo Seiyaku Co., Ltd., [active component concentration: 100%]) were placed, and completely dissolved at 95°C. After cooling to 60°C, 266 g of methyl methacrylate and 266 g of butyl acrylate were placed, and the nitrogen replacement was performed while stirring at 120 rpm. Subsequently, 0.0058 g of ferrous chloride and 25 g of an aqueous solution of 10% L(+) sodium tartrate (TAS) were added. Then, 100 g of an aqueous solution of 0.5% hydrogen peroxide (HPO) was added over 3 hours to perform the emulsion polymerization. After terminating the addition of the aqueous solution of hydrogen peroxide, the maturation was performed for one hour and the polymerization reaction was completed to yield an emulsion with a solid content of 39.8%.

Example 2

An emulsion with a solid content of 39.7% was yielded by performing the polymerization in the same way as in Example 1, except that PVA-2 (polymerization degree: 1700, saponification degree: 98 mol%, amount of 1, 2-glycol bond: 2.2 mol%) was used in place of PVA-1.

Example 3

An emulsion with a solid content of 39.9% was yielded by performing the polymerization in the same way as in Example 1, except that PVA-4 (polymerization degree: 1000, saponification degree: 88 mol%, amount of 1,2-glycol bond: 2.5 mol%, content of ethylene: 4.0 mol%) was used in place of PVA-1.

Example 4

An emulsion with a solid content of 39.4% was yielded in the same way as in Example 1, except that polyoxyethylene lauryl ether used in Example 1 was changed to sodium polyoxyethylene alkyl ether sulfate (Latemul E-118B [active component concentration: 26%] supplied by Kao Corporation) and the amount of ion-exchanged water was changed from 750 g to 700 g.

Example 5

An emulsion with a solid content of 39.3% was yielded in the same way as in Example 1 , except that polyoxyethylene lauryl ether used in Example 1 was changed to polyoxyethylene-polyoxypropylene block polymer (NewPol PE [active component concentration: 100%] supplied by Sanyo Chemical Industries, Ltd.).

Example 6

An emulsion with a solid content of 39.5% was yielded in the same way as in Example 1, except that polyoxyethylene lauryl ether used in Example 1 was changed to sodium lauryl sulfate (Emal 0 [active component concentration: 99 % supplied by Kao Corporation).

Example 7

An emulsion with a solid content of 39.9% was yielded in the same way as in Example 1, except that polyoxyethylene lauryl ether used in Example 1 was changed to sodium alkyldiphenyl ether disulfonate (Pelex SS-L [active component concentration: 50%] supplied by Kao Corporation) and the amount of ion-exchanged water was changed from 750 g to 730 g.

Example 8

An emulsion with a solid content of 40.9% was yielded in the same way as in Example 1, except that polyoxyethylene lauryl ether used in Example 1 was changed to sodium dialkyl sulfosuccinate (Pelex CS [active component concentration: 45%] supplied by Kao Corporation)

Example 9

An emulsion with a solid content of 39.7% was yielded by performing the polymerization in the same way as in Example 1, except that the amounts of PVA-1 and polyoxyethylene lauryl ether were changed to 20.8 g and 19.2 g, respectively.

Example 10

An emulsion with a solid content of 39.7% was yielded by performing the polymerization in the same way as in Example 1, except that the amounts of PVA-1 and polyoxyethylene lauryl ether were changed to 37.2 g and 2.8 g, respectively.

Example 11

In a pressure-resistant autoclave equipped with a nitrogen blowing inlet and a thermometer, 60 g of an aqueous solution of 10% PVA-3 (saponification degree: 88 mol%, average polymerization degree: 500, amount of 1,2-glycol bond: 2.2 mol%) and 40 g of an aqueous solution of 10% polyoxyethylene lauryl ether (DKS NL-250 Supplied by Dai-ichi Kogyo Seiyaku Co. , Ltd. , [active component concentration: 100%]) were placed, pH was adjusted to pH=4 with diluted sulfuric acid, and 60 g of styrene and 1 g of t-dodecyl mercaptan were placed. Then, after the nitrogen replacement was performed, 40 g of butadiene was added with pressure from a pressure-resistant weighing machine, and the temperature was raised up to 70˚C. Subsequently, 10 g of 2% t-butyl hydroperoxide was added with pressure to initiate the polymerization. An inner pressure was decreased from 4.5 kg/cm$^2$ along with progress of the polymerization, and became 0.35 kg/cm$^2$ after 20 hours. A polymerization rate was 99.2%. A styrene-butadiene copolymer emulsion with a solid content of 51.2% was yielded.

Comparative Example 1

An emulsion with a solid content of 39.6% was yielded by performing the polymerization in the same way as in Example 1 , except that the amounts of PVA-1 and polyoxyethylene lauryl ether were changed to 38.8 g and 1.2 g, respectively.

Comparative Example 2

An emulsion with a solid content of 39.7% was yielded by performing the polymerization in the same way as in Example 1, except that the amounts of PVA-1 and polyoxyethylene lauryl ether were changed to 19.2 g and 20.8 g, respectively.

Comparative Example 3

An emulsion with a solid content of 39.4% was yielded in the same way as in Example 1, except that polyoxyethylene lauryl ether used in Example 1 was changed to polyoxyethylene sorbitan monooleate (Rheodol TW-O120V supplied by Kao Corporation).

Comparative Example 4

An emulsion with a solid content of 39.9% was yielded by performing the polymerization in the same way as in Example 1, except that PVA-1 was changed to PVA- 6 (polymerization degree: 1700, saponification degree: 88 mol%, amount of 1,2-glycolbond: 1.6 mol%) in Example 1.

Comparative Example 5

An emulsion with a solid content of 39.3% was yielded by performing the polymerization in the same way as in Example 1, except that PVA-1 was changed to PVA- 6 (polymerization degree: 1700, saponification degree: 88 mol%, amount of 1,2-glycol bond: 1.6 mol%) in Example 4.

Comparative Example 6

An emulsion with a solid content of 39.8% was yielded by performing the polymerization in the same way as in Example 1, except that PVA-1 was changed to PVA-7 (polymerization degree: 1700, saponification degree: 98 mol%, amount of 1, 2-glycol bond: 1.6 mol%) in Example 1.

Comparative Example 7

In a 2-liter glass polymerization vessel equipped with a reflux cooling device, a thermometer, a nitrogen blowing inlet and an anchor type stirring wing, 750 g of ion-exchanged water and 40 g of PVA-1 were placed, and completely dissolved at 95˚C. After cooling to 60˚C, 266 g of methyl methacrylate and 266 g of butyl acrylate were placed, and the nitrogen replacement was performed while stirring at 120 rpm. Subsequently, 0.0058 g of ferrous chloride and 25 g of aqueous solution of 10% L(+) sodium tartrate (TAS) were added. Then, 100 g of an aqueous solution of 0.5% hydrogen peroxide (HPO) was added over 3 hours to perform the emulsion polymerization. After terminating the addition of the aqueous solution of hydrogen peroxide, the maturation was performed for one hour and the polymerization reaction was completed to yield an emulsion with a solid content of 39.8%.

Comparative Example 8

An emulsion with a solid content of 39.7% was yielded by performing the polymerization in the same way as in Example 1, except that PVA-1was changed to PVA-5 (polymerization degree: 1000, saponification degree : 88 mol%, amount of 1, 2-glycol bond: 1.6 mol%, content of ethylene: 4.0 mol%) in Example 1.

Experimental results are collectively shown in Tables 1 and 2.

[Table 1]

| | | Emulsion | | | | | | | | | | |
|---|---|---|---|---|---|---|---|---|---|---|---|---|
| | | Dispersant | | | | | | | | | | |
| | | Vinyl alcohol polymer (A) | | | | | | Surfactant (B) | | | | |
| | | Polymerization degree | Saponification degree (mol%) | Amount of 1,2-glycol bond (mol%) | Content of ethylene (mol%) | Use amount relative to dispersoid (A) | Use amount relative to dispersoid (B) | Type of surfactant | Weight ratio of dispersants (A)/(B) | Dispersoid | Average particle diameter ($\mu$m) | Fraction insoluble in toluene (%) |
| Example 1 | PVA-1 | 1700 | 88 | 2.2 | - | 4.5 | 3.0 | Polyoxyethylene alkyl ether | 60/40 | MMA/BA | 0.32 | 34.6 |
| Example 2 | PVA-2 | 1700 | 90 | 2.2 | - | 4.5 | 3.0 | Polyoxyethylene alkyl ether | 60/40 | MMA/BA | 0.41 | 35.3 |
| Example 3 | PVA-4 | 1000 | 88 | 2.5 | 4.0 | 4.5 | 3.0 | Polyoxyethylene alkyl ether | 60/40 | MMA/BA | 0.43 | 34.8 |
| Example 4 | PVA-1 | 1700 | 88 | 2.2 | - | 4.5 | 3.0 | Polyoxyethylene alkyl ether sulfate ester salt | 60/40 | MMA/BA | 0.40 | 34.0 |
| Example 5 | PVA-1 | 1700 | 88 | 2.2 | - | 4.5 | 3.0 | Polyoxyethylene-polyoxypropylene blook copolymer | 60/40 | MMA/BA | 0.39 | 31.5 |
| Example 6 | PVA-1 | 1700 | 88 | 2.2 | - | 4.5 | 3.0 | Alkyl sulfate ester salt | 60/40 | MMA/BA | 0.41 | 32.4 |
| Example 7 | PVA-1 | 1700 | 88 | 2.2 | - | 4.5 | 3.0 | Sodium alkyldiphenyl ether disulfonate salt | 60/40 | MMA/BA | 0.43 | 36.7 |
| Example 8 | PVA-1 | 1700 | 88 | 2.2 | - | 4.5 | 3.0 | Sodium dialkyl sulfosuccinate ester salt | 60/40 | MMA/BA | 0.38 | 32.6 |
| Example 9 | PVA-1 | 1700 | 88 | 2.2 | - | 3.9 | 3.6 | Polyoxyethylene alkyl ether | 52/48 | MMA/BA | 0.35 | 31.0 |
| Example 10 | PVA-1 | 1700 | 88 | 2.2 | - | 7.0 | 0.5 | Polyoxyethylene alkyl ether | 93/7 | MMA/BA | 0.48 | 44.2 |
| Example 11 | PVA-3 | 500 | 88 | 2.2 | - | 6.0 | 4.0 | Polyoxyethylene alkyl ether | 60/40 | SBR | 0.40 | 34.9 |

(continued)

| | | Emulsion | | | | | | | | | | |
| | | Dispersant | | | | | | | | | | |
| | | Vinyl alcohol polymer (A) | | | | | | Surfactant (B) | | | | |
| | | Polymerization degree | Saponification degree (mol%) | Amount of 1,2-glycol bond (mol%) | Content of ethylene (mol%) | Use amount relative to dispersoid (A) | Use amount relative to dispersoid (B) | Type of surfactant | Weight ratio of dispersants (A)/(B) | Dispersoid | Average particle diameter ($\mu$m) | Fraction insoluble in toluene (%) |
|---|---|---|---|---|---|---|---|---|---|---|---|---|
| Comparative Example 1 | PVA-1 | 1700 | 88 | 2.2 | - | 7.3 | 0.2 | Polyoxyethylene alkyl ether | 97/3 | MMA/BA | 0.52 | 51.2 |
| Comparative Example 2 | PVA-1 | 1700 | 88 | 2.2 | - | 3.6 | 3.9 | Polyoxyethylene alkyl ether | 48/52 | MMA/BA | 0.31 | 30.4 |
| Comparative Example 3 | PVA-1 | 1700 | 88 | 2.2 | - | 4.5 | 3.0 | Polyoxyethylene sorbitan monooleate | 60/40 | MMA/BA | 0.38 | 31.3 |
| omparative Example 4 | PVA-6 | 1700 | 88 | 1.6 | - | 4.5 | 3.0 | Polyoxyethylene alkyl ether | 60/40 | MMA/BA | 0.43 | 31.2 |
| Comparative Example 5 | PVA-6 | 1700 | 88 | 1.6 | - | 4.5 | 3.0 | Polyoxyethylene alkyl ether sulfate ester salt | 60/40 | MMA/BA | 0.42 | 31.8 |
| Comparative Example 6 | PVA-7 | 1700 | 98 | 1.6 | - | 4.5 | 3.0 | Polyoxyethylene alkyl ether | 60/40 | MMA/BA | 0.44 | 37.4 |
| Comparative Example 7 | PVA-1 | 1700 | 88 | 2.2 | - | 7.5 | - | - | 100/0 | MMA/BA | 0.70 | 65.2 |
| Comparative Example 8 | PVA-5 | 1000 | 88 | 1.6 | 4.0 | 4.5 | 3.0 | Polyoxyethylene alkyl ether | 60/40 | MMA/BA | 0.48 | 38.2 |

MMA/BA: Copolymer of methyl methacrylate and n-butyl acrylate

[Table 2]

| | Evaluation results | | | | |
|---|---|---|---|---|---|
| | Mechanical stability <Filtration residue> (%) | Pigment compatibility | Film transparency | Solvent resistance | |
| | | | | Liquid absorption rate (%) | degree of Dissolution (%) |
| Example 1 | 0.7 | ○ | ○ | 183 | 17 |
| Example 2 | 0.9 | ○ | ○ | 173 | 15 |
| Example 3 | 0.8 | ○ | ○ | 160 | 13 |
| Example 4 | 0.5 | ○ | ○ | 182 | 17 |
| Example 5 | 0.4 | ○ | ○ | 178 | 16 |
| Example 6 | 0.5 | ○ | ○ | 182 | 18 |
| Example 7 | 0.6 | ○ | ○ | 184 | 15 |
| Example 8 | 0.5 | ○ | ○ | 186 | 16 |
| Example 9 | 0.8 | ○ | ○ | 193 | 19 |
| Example 10 | 0.9 | ○ | ○ | 164 | 12 |
| Example 11 | 0.7 | ○ | ○ | 179 | 16 |
| Comparative Example 1 | 0.7 | ○ | Δ | 160 | 11 |
| Comparative Example 2 | 2.8 | Δ | ○ | 213 | 25 |
| Comparative Example 3 | 15.0 | × | Δ | 178 | 14 |
| Comparative Example 4 | 3.3 | Δ | Δ | 205 | 20 |
| Comparative Example 5 | 2.5 | Δ | Δ | 195 | 19 |
| Comparative Example 6 | 1.8 | Δ | × | 183 | 18 |
| Comparative Example 7 | 0.5 | ○ | × | 155 | 10 |
| Comparative Example 8 | 1.5 | Δ | × | 178 | 16 |

Industrial Applicability

The aqueous emulsion of the present invention is excellent in mechanical stability, film transparency, pigment dispersibility and solvent stability, particularly useful as the coating binder, and additionally is suitable for adhesives, various binders, admixtures, and fields of paper processing and fiber processing.

**Claims**

1. An aqueous emulsion comprising a polymer having at least one monomer unit selected from the group consisting of a (meth)acrylate ester monomer unit, a styrene monomer unit and a diene monomer unit as a dispersoid, further comprising a vinyl alcohol polymer (A) having 1.9 mol% or more 1,2-glycol bond and a saponification degree of 70 mol% or more and a surfactant (B) as dispersants, wherein the surfactant (B) is at least one selected from the group consisting of polyoxyethylene alkyl ether, polyoxyethylene-polyoxypropylene block copolymers, polyoxyethylene alkyl ether sulfate ester salts, alkyl sulfate ester salts, sodium alkyldiphenyl ether disulfonate salts and sodium dialkyl sulfosuccinate ester salts and a weight ratio of (A)/(B) is 50/50 to 95 / 5 and an average particle diameter of dispersed particles is 0.5 $\mu$m or less.

2. The aqueous emulsion according to claim 1 wherein the dispersoid is a methyl methacrylate/n-butyl acrylate copolymer or a styrene/butadiene copolymer.

3. The aqueous emulsion according to claim 1 or 2 wherein a ratio of the dispersant to the dispersoid is 2 to 20 parts by weight of the dispersant relative to 100 parts by weight of the dispersoid.

4. The aqueous emulsion according to any of claims 1 to 3 wherein a fraction insoluble in toluene is 50% or less.

5. A coating composed of the aqueous emulsion according to any of claims 1 to 4.

6. The coating according to claim 5 further combining 40 to 400 parts by weight of a pigment relative to 100 parts by weight of a solid content of the aqueous emulsion.

## Patentansprüche

1. Wässrige Emulsion, welche ein Polymer umfasst, das wenigstens eine Monomereinheit aufweist, ausgewählt aus der Gruppe, bestehend aus einer (Meth-)Acrylatester-Monomereinheit, einer Styrol-Monomereinheit und einer Dien-Monomereinheit als Dispersoid, und weiter ein Vinylalkohol-Polymer (A) umfasst, mit 1,9 Mol-% oder mehr 1,2-Glycolbindung und einem Verseifungsgrad von 70 Mol-% oder mehr, und einen oberflächenaktiven Stoff (B) als Dispergiermittel, wobei der oberflächenaktive Stoff (B) wenigstens einer ist, ausgewählt aus der Gruppe, bestehend aus Polyoxyethylenalkylether, Polyoxyethylen-Polyoxypropylen-Blockcopolymeren, Polyoxyethylenalkylethersulfatestersalzen, Alkylsulfatestersalzen, Natriumalkyldiphenyletherdisulfonatsalzen und Natriumdialkylsulfosuccinatestersalzen, und ein Gewichtsverhältnis von (A)/(B) 50/50 bis 95/5 beträgt und ein mittlerer Teilchendurchmesser der dispergierten Teilchen 0,5 $\mu$m oder weniger beträgt.

2. Wässrige Emulsion gemäß Anspruch 1, wobei das Dispersoid ein Methylmethacrylat/n-Butylacrylat-Copolymer oder ein Styrol/Butadien-Copolymer ist.

3. Wässrige Emulsion gemäß Anspruch 1 oder 2, wobei das Verhältnis von Dispergiermittel zu Dispersoid 2 bis 20 Gewichtsteile Dispergiermittel im Vergleich zu 100 Gewichtsteilen Dispersoid beträgt.

4. Wässrige Emulsion gemäß einem der Ansprüche 1 bis 3, wobei ein in Toluol unlöslicher Anteil 50 % oder weniger beträgt.

5. Beschichtung, die aus der wässrigen Emulsion gemäß einem der Ansprüche 1 bis 4 zusammengesetzt ist.

6. Beschichtung gemäß Anspruch 5, bei der weiter 40 bis 400 Gewichtsteile eines Pigments im Vergleich zu 100 Gewichtsteilen Feststoffgehalt der wässrigen Emulsion kombiniert werden.

## Revendications

1. Emulsion aqueuse comprenant un polymère possédant au moins un motif monomère choisi dans le groupe constitué par un motif monomère d'ester de (méth)acrylate, un motif monomère de styrène et un motif monomère de diène en tant que dispersoïde, comprenant en outre un polymère d'alcool vinylique (A) ayant 1,9 % en mole ou plus de liaison 1,2-glycol et un degré de saponification de 70 % en mole ou plus et un tensioactif (B) en tant que dispersants, dans lequel le tensioactif (B) est au moins un tensioactif choisi dans le groupe constitué par un éther d'alkyle polyoxyéthyléné, les copolymères séquencés de polyoxyéthylène-polyoxypropylène, les sels d'ester d'alkyl éther sulfate polyoxyéthyléné, les sels d'ester de sulfate d'alkyle, les sels d'alkyldiphényl éther disulfonate de sodium et les sels d'ester de dialkyl sulfosuccinate de sodium, et un rapport pondéral de (A)/(B) est 50/50 à 95/5 et un diamètre moyen de particule de particules dispersées est inférieur ou égal à 0,5 µm.

2. Emulsion aqueuse selon la revendication 1, dans laquelle le dispersoïde est un copolymère de méthacrylate de méthyle/acrylate de n-butyle ou un copolymère de styrène/butadiène.

3. Emulsion aqueuse selon la revendication 1 ou la revendication 2, dans laquelle un rapport du dispersant sur le dispersoïde est de 2 à 20 parties en poids du dispersant par rapport à 100 parties en poids du dispersoïde.

4. Emulsion aqueuse selon l'une quelconque des revendications 1 à 3, dans laquelle une fraction insoluble dans le toluène est inférieure ou égale à 50 %

5. Revêtement composé de l'émulsion aqueuse selon l'une quelconque des revendications 1 à 4.

6. Revêtement selon la revendication 5, comprenant en outre 40 à 400 parties en poids d'un pigment par rapport à 100 parties en poids d'une teneur en solide de l'émulsion aqueuse.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H4185607 B
- JP 2001220484 A
- JP 2004346182 A